(19) Europäisches Patentamt
European Patent Office
Office européen des brevets

(11) Veröffentlichungsnummer: **0 167 016**
**B1**

(12) # EUROPÄISCHE PATENTSCHRIFT

(45) Veröffentlichungstag der Patentschrift: **21.09.88**

(51) Int. Cl.⁴: **C 09 K 3/00**, B 05 D 1/02

(21) Anmeldenummer: **85107078.9**

(22) Anmeldetag: **07.06.85**

(54) **Einkomponentenformulierung zur Entklebung, Ausfällung und Koagulierung von Steinschlag- und Unterbodenschutz auf Basis von Wachsen, wachsähnlichen Kunststoffen und Kunststoffdispersionen sowie von Kunstharzlacken in Nassabscheidern von Spritzlackieranlagen unter Erzielung eines aufschwimmenden**

(30) Priorität: **07.06.84 DE 3421257**

(43) Veröffentlichungstag der Anmeldung: **08.01.86 Patentblatt 86/2**

(45) Bekanntmachung des Hinweises auf die Patenterteilung: **21.09.88 Patentblatt 88/38**

(84) Benannte Vertragsstaaten: **AT BE CH DE FR GB IT LI LU NL SE**

(56) Entgegenhaltungen:

(73) Patentinhaber: **Zeller + Gmelin GmbH & Co, Schlossstrasse 20, D-7332 Eislingen / Fils (DE)**

(72) Erfinder: **Seng, Hans- Peter, Dr., Spitzenbergweg 1, D-7334 Süssen (DE)**

(74) Vertreter: **Zumstein, Fritz, Dr., Dr. F. Zumstein sen Dr. E. Assman Dipl.- Ing. F. Klingseisen Dr. F. Zumstein jun. Bräuhausstrasse 4, D-8000 München 2 (DE)**

**EP 0 167 016 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

In Spritzlackieranlagen wird Lack unter Druck durch Düsen fein verteilt auf zu lackierende Gegenstände, beispielsweise Autos, gesprüht. Dies geschieht in sogenannten Spritzkabinen, Spritzständen oder an Spritzwänden. Der hierbei entstehende Farbnebel muß aus der Luft wieder entfernt werden. Hierzu wird die mit Farbnebeln verunreinigte Luft mittels Ventilatoren durch Farbnebel-Naßabscheider gesaugt, in denen Wasser in Gegenstrom geführt und durch Einbauten und dergleichen in innigen Kontakt mit der Farbnebel enthaltenden Luft gebracht wird. Ein derartiger Farbnebel-Naßabscheider ist aus der DE-AS-1 269 594 bekannt.

Zum Ausfällen und Koagulieren der in dem ständig in der Naßabscheider ungewälzten Wasser abgeschiedenen Lackpartikel werden dem Wasser üblicherweise alkalisch reagierende Mittel, sogenannte Lackentklebungs- oder -koagulierungsmittel beigegeben. Hierdurch wird die Neigung der Lackpartikel, an den Wänden des Naßabscheiders und sonstigen Bauelementen sich abzulagern, verringert, wodurch Funktionsstörungen und ein erheblicher Wartungs- und Reinigungsaufwand vermieden werden. Auch der Abtransport und die endgültige Lagerung des Lackschlamms wird erleichtert, wenn er aus einem nicht klebenden Lackkoagulat besteht.

Eine Arbeitsweise dieser Art wird in der DE-OS-2 758 873 beschrieben, die ein Verfahren zum Ausfällen von Kunstharzlacken in Farbnebel-Naßabscheidern von Spritzlackieranlagen unter Verwendung von alkalisch eingestelltem Wasser mit einem Lackpartikel einhüllenden Zuschlagsstoff betrifft, das dadurch gekennzeichnet ist, daß als Zuschlagsstoff eine wäßrige Wachsdispersion eingesetzt wird. Hierbei soll das Wasser auf einen pH-Wert von 8,0 bis 13,5 eingestellt werden, wozu konzentrierte wäßrige Natronlauge eingesetzt wird. Die als Zuschlagsstoff eingesetzte Wachsdispersion enthält vorteilhaft ein Gemisch aus Montanwachs und Paraffinabkömmlingen. Es handelt sich hierbei um eine Zweikomponentenformulierung, da außer der Wachsdispersion getrennt Alkali zugegeben wird.

Weiterhin ist es, die die Praxis gezeigt hat, bei diesem Verfahren erforderlich, in Gegenwart von Tensiden zu arbeiten, wenngleich die Verwendung von Tensiden dort lediglich als vorteilhaft bezeichnet wird.

Das beschriebene Verfahren besitzt auch den Nachteil, daß nur absinkender Lachschlamm anfällt und daß es demzufolge nur für Großanlagen, vorwiegend im Bereich der fahrzeugproduzierenden Industrie, Verwendung findet.

Weitere herkömmliche Koaguliermittel arbeiten auf der Basis von:

1. Natronlauge und Mineralöl
2. nur Natronlauge
3. sauren, neutralen oder alkalischen Flockungsmitteln auf Basis von Aluminium- und Eisensalzen unter Zusatz von polymeren Acrylaten als Hilfsflocker
4. Mischungen aus Natriumhydroxid, Silikaten und Phosphaten in Pulverform
5. Calciumchlorid-Lösungen
6. Wachsdispersionen und Natronlauge.

Diese Koaguliermittel sind alle mehr oder weniger in der Lage, Lacke auf Basis Nitro, Polyacrylat, Polyester, Polyurethan und Wachsunterbodenschutz herkömmlicher Art in Form von sedimentierendem Koagulat zu koagulieren. Alle bisherigen bekannten, herkömmlichen Koaguliermittel, einschließlich derjenigen auf Wachsbasis sind jedoch nicht in der Lage, Unterbodenschutz- und 1- und 2 K-Steinschlagschutztypen, die hochgefüllt sind, zu einem flottierenden Lackschlamm zu koagulieren und zu entkleben.

Ziel der Erfindung war es daher, eine Einkomponentenformulierung zu schaffen, die zur Entklebung, Ausfällung und Koagulierung von Steinschlag- und Unterbodenschutz auf Basis von Wachsen, wachsähnlichen Kunststoffen und Kunststoffdispersionen sowie von Kunstharzlacken in Farbnebelnaßabscheidern von Spritzlackieranlagen unter Bildung eines an der Wasseroberfläche schwimmenden Lackschlamms geeignet ist, und die weitgehend ohne weitere Zusätze für die Koagulierflotte, insbesondere ohne Zusatz eines Entschäumers auskommt.

Diese Ziele werden durch den Einsatz einer wäßrigen Polyurethansuspension als Zuschlagsstoff erreicht.

Gegenstand der Erfindung ist daher eine Einkomponentenformulierung zum Entkleben, Ausfällen und Koagulieren von Steinschlag-und Unterbodenschutz auf Basis von Wachsen, wachsähnlichen Kunststoffen und Kunststoffdispersion sowie von Kunstharzlacken in Farbnebelnaßabscheidern von Spritzlackieranlagen unter Verwendung eines lackpartikelumhüllenden Zuschlagsstoffes, dadurch gekennzeichnet, daß sie als Zuschlagsstoff eine wäßrige Polyurethansuspension enthält, die einen an der Wasseroberfläche schwimmenden Lackschlamm erzeugt.

Sind der Steinschlag- oder Unterbodenschutz auf Basis von Kunststoffdispersionen formuliert, handelt es sich z. B. um PVC.

Gemäß einer bevorzugten Ausführungsform der Erfindung enthält die Polyurethansuspension ein Gemisch aus einem aliphatischen Alkohol mit 1 bis 3 Kohlenstoffatomen und Poly[oxyäthylen(dimethyliminio) äthylen]dichlorid.

Eine spezielle Einkomponentenformulierung der erfindungsgemäß definierten Art ist gekennzeichnet durch einen Gehalt an

| | | | | | | |
|---|---|---|---|---|---|---|
| a) | | 1 | - | 8 | % | aliphatischem Alkohol mit |
| | vorzugsweise | 2 | - | 5 | % | 1 - 3 Kohlenstoffatomen |
| b) | | 0,01 | - | 1,0 | % | pyrogenem Siliciumdioxid mit |
| | vorzugsweise | 0,2 | - | 0,5 | % | einer spezifischen Oberfläche von 50 - 380 $m^2/g$ |
| c) | | 3 | - | 20 | % | Poly[oxyäthylen(dimethyliminio)- |
| | vorzugsweise | 4 | - | 10 | % | äthylen]dichlorid |
| d) | | 10 | - | 30 | % | Polyurethanpulver |
| | vorzugsweise | 15 | - | 25 | % | |

jeweils bezogen auf das Gewicht der Formulierung, wobei der Rest der Formulierung durch Wasser gebildet wird.

Eine bevorzugte erfindungsgemäße Einkomponentenformulierung besitzt folgende Zusammensetzung:

| | |
|---|---|
| Wasser | 74,5 Gew.-% |
| Propanol-2 | 3,0 Gew.-% |
| pyrogenes Siliciumdioxid mit einer spezifischen Oberfläche von 200 $m^2/g$ | 0,5 Gew.-% |
| Poly[oxyäthylen (dimethyliminio) äthylen]-dichlorid | 4 Gew.-% |
| Polyurethanpulver (Korngröße kleiner 1 µm) | 18,0 Gew.-% |

Diese spezielle Einkomponentenformulierung besitzt folgende Kenndaten:

| | |
|---|---|
| Farbe | hellbraun, pastös |
| Schüttgewicht | 0,8 $g/cm^3$ |
| pH-Wert 10 %-ig in Wasser dispergiert | 7,9 |

Als aliphatische Alkohole mit 1 bis 3 Kohlenstoffatomen der Komponente a) kommen insbesondere Äthanol und Propanol-2 sowie auch Methanol in Frage, wenngleich das letztgenannte wegen seiner Giftigkeit weniger bevorzugt ist. Bevorzugt wird Propanol-2 eingesetzt.

Das als Komponente b) eingesetzte pyrogene Siliciumdioxid wird durch Verbrennung von Siliciumtetrachlorid zu Siliciumdioxid erhalten. Sein Bereich für die spezifische Oberfläche beträgt 50 bis 380 $m^2/g$, vorzugsweise liegt er in der Größenordnung von 200 $m^2/g$. Die mittlere Größe der Primärteilchen des pyrogenen Siliciumdioxids liegt im allgemeinen im Bereich von 10 bis 20 nm, insbesondere bei 12 nm. Die primärteilchengröße spielt bei dem Aufbau einer Gerüststruktur in der wäßrigen Suspension eine Rolle.

Bei dem als Komponente c) eingesetzten Poly[oxyäthylen(dimethyliminio)äthylen]dichlorid handelt es sich um einen flockungsaktiven Wirkstoff, der sich durch algizide und bakterizide Wirkung auszeichnet. Die Herstellung der Komponente c) erfolgt aus Dichlorsthyläther

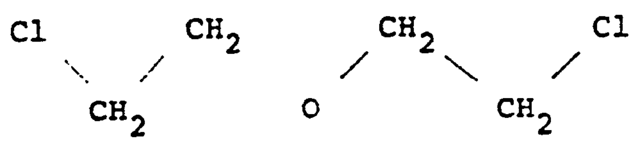

und Tetramethyläthylendiamin

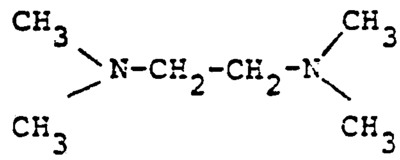

Ein bevorzugt als Komponente c) eingesetztes Poly[oxyäthylen(dimethyliminio)äthylen]dichlorid besitzt eine Dichte von 1,15 g/$cm^3$ (bei 25° C) und einen Flammpunkt im offenen "Cleveland" von 108° C.

Bei dem als Komponente d) eingesetzten Polyurethanpulver kann es sich um einen Abfallstoff der Integralschaumstoffherstellung handeln, dessen Verwendung im vorliegenden Fall eine sinnvolle Abfallverwertung darstellt. Die Herstellung derartiger Polyurethane ist aus der Fachliteratur bekannt. Der harte Polyurethan-Integralschaumstoff wird großtechnisch hergestellt aus:

-Polyolen
-Polyisocyanaten auf Basis von Diphenylmethan-4,4'-diisocyanat

Diese Polyisocyanate sind in der Lage unter Einwirkung von speziellen Katalysatoren zusammen mit den Polyolen zu Kunststoffen zu polymerisieren, die durch Einsatz von Treibmitteln zu schaumstoffartigen mikroporösen Werkstoffen verarbeitet werden. Selbst der Schleifstaub dieser Polyurethanschäume enthält noch in den Staubkörnchen Lufteinschlüsse, die den Polyurethanstaub an der Wasseroberfläche halten. Lediglich beispielshalber werden nachstehend Ausgangskomponenten für die Herstellung vorliegend in Frage kommender Polyurethanpulver angegeben.

<u>Isocyanatkomponenten</u>:

Diphenylmethan-4,4'-diisocyanat (MDI) und Derivate dieser Verbindung. Handelsnamen dieser Produkte:

| | |
|---|---|
| Desmodur 44 P90® | (modif. MDI, Gehalt an N=C=O 28 %<br>Viskosität 100 - 160 mPa s bei 25° C) |
| Desmodur 44 V10B® | (MDI-Polymer,<br>N=C=O-Gehalt 31 %<br>Viskosität 110 - 150 mPa s bei 25° C) |
| Desmodur 44 P01® | (modif. MDI,<br>N=C=O-Gehalt 29 %<br>Viskosität 120 - 180 mPa s bei 25° C) |

<u>Polydiole</u>:

| | |
|---|---|
| Baydur 61110B® | Polyätherpolyol<br>OH-Zahl 480<br>Viskosität 1100 mPa s bei 25° C |
| Baydur 6130V® | Polyätherpolyol<br>OH-Zahl 490<br>Viskosität 1000 mPa s bei 25° C |
| Baydur 6310S® | Polyätherpolyol<br>OH-Zahl 435<br>Viskosität 2850 mPa s bei 25° C |
| Baydur 6320M® | Polyätherpolyol<br>OH-Zahl 435<br>Viskosität 2850 mPa s bei 25° C |
| Baydur 6410L® | Polyätherpolyol<br>OH-Zahl 365<br>Viskosität 2400 mPa s bei 25° C |
| Baydur 6510F® | Polyätherpolyol<br>OH-Zahl 495 |

| | |
|---|---|
| | Viskosität 2300 mPa s bei 25° C |
| Baydur 6520B® | Polyätherpolyol<br>OH-Zahl 505<br>Viskosität 2900 mPa s bei 25° C |

Das Polyurethanpulver wird vorliegend als Koaguliermittel eingesetzt. Seine Korngröße muß kleiner als 1 µm sein, da zu grobe Urethanteilchen nicht ausreichend koagulierend wirken. Für die Funktion des Polyurethanpulvers als Koaguliermittel kann weiterhin seine Dichte (Schüttdichte) in Bereich von 0,6 bis 0,6 g/cm³ von Bedeutung sein.

Da Polyurethan in Wasser vorwiegend hydrophob reagiert, kommt es bei Kontakt mit Lacksprühnebeln, die auf die Wasseroberfläche auftreffen, zu einer spontanen Zusammenlagerung von hydrophoben Lackteilchen und hydrophoben Polyurethanteilchen. Durch diese Agglomeration wird der ursprünglich klebende Lack entklebt und kann problemlos aus der Lackieranlage entfernt werden.

Der als Komponente a) eingesetzte aliphatische Alkohol mit 1 bis 3 Kohlenstoffatomen stellt den Kontakt zwischen Wasser und Polyurethanpulver her und ermöglicht die Herstellung einer Polyurethansuspension in Wasser. Wird diese Suspension bei ihrer Anwendung durch relativ große Wassermengen in der Lackieranlage stark verdünnt, so verliert der Kontaktvermittler (aliphatischer Alkohol mit 1 bis 3 Kohlenstoffatomen) seine Wirksamkeit und das Polyurethanpulver wird vom Wasser abgestoßen. Da das Polyurethanpulver aus Integralschaumstoff gewonnen wurde, besitzt auch das Pulver Lufteinschlüsse, die es an der Oberfläche flottieren lassen. Das an der Wasseroberfläche treibende hydrophobe Polyurethanpulver "reagiert" mit den ebenfalls hydrophoben Lackteilchen, die als Sprühnebel auf die Wasseroberfläche auftreffen, zu Agglomeraten. Der polymere flockungsaktive Wirkstoff (Komponente c) wird an der Oberfläche der Polyurethan-Lack-Agglomerate adsorbiert. Die Adsorptionsschicht entklebt einerseits die Agglomerate und bildet andererseits durch "Brückenbindung" größere Agglomeratverbände, die sich problemlos von der Wasseroberfläche abräumen lassen.

Die gleichzeitige bakterizide, algizide und fungizide Wirkung des flockungsaktiven Hilfsstoffes (Komponente c) zeigen die nachstehenden Daten.

| | | | | |
|---|---|---|---|---|
| Aerobacter Aerogenes | 0,3 | - | 1 ppm | minimale, wachstums-hemmende Konzentration an Wirkstoff |
| Desulfofibrio Desulfuricans | | | 30 ppm | " |
| Legionella pneumophila (Legionärskrankheit) | | | 200 ppm | " |
| Algen: | | | | |
| Chlorella pyrenoidosa | | | 2 ppm | " |
| Chlorococcum hyposporum | | | 2 ppm | " |
| Phormidium Inundatum | | | 8 ppm | " |

Die Herstellung der erfindungsgemäßen Formulierung kann wie folgt erfolgen:

Das Wasser wird vorgelegt und der aliphatische Alkohol mit 1 bis 3 Kohlenstoffatomen, das Siliciumdioxid und das Poly[oxyäthylen(dimethyliminio)äthylen]dichlorid werden eingerührt. Anschließend wird das Polyurethanpulver mit Hilfe einer Rührtechnik (z. B. langsam rotierendes Ankerrührwerk) mit der vorgelegten flüssigen Mischung intensiv gemischt. Es entsteht hierbei eine Paste mit thixotropen Eigenschaften. Diese Paste ist rühr- und pumpfähig.

Eine weitere Möglichkeit zur Herstellung der erfindungsgemäßen Formulierung besteht darin, in einem Mischer oder Kneter das Polyurethanpulver vorzulegen und die Mischung aus Wasser, flockungsaktivem Wirkstoff, aliphatischem Alkohol mit 1 bis 3 Kohlenstoffatomen und pyrogenem Siliciumdioxid langsam einzukneten.

Die erfindungsgemäße Einkomponentenformulierung eignet sich unter anderem für die Entklebung, Ausfällung und Koagulierung lösungsmittelhaltiger Lacke auf Basis Acryl und Polyester sowie von hochgefülltem Unterbodenschutz und Steinschlagschutz, insbesondere von lösungsmittelhaltigen Decklacken auf Kunstharzbasis, vor Metallic-Grundierungen und Metallic-Klarlack sowie Primern und hochgefüllten 1 K- und 2 K-Steinschlagschutz. Es entsteht ein stabil aufschwimmender und entklebter Lackschlamm. Die erfindungsgemäße Formulierung arbeitet auch bei Überdosierung schaumfrei, so daß eine zusätzliche Verwendung von Entschäumern entfällt. Sie arbeitet auch bei Überdosierung im neutralen pH-Bereich. Da sich der Wirkstoff hydrophob verhält, belastet er das Abwasser nicht.

Die erfindungsgemäße Formulierung eignet sich als Zusatz in Lackspritzkabinen und Lackspritzständen mit Auswaschsystem. Sie entklebt Lacke und Unterbodentypen vollständig, wodurch ein störungsfreies Arbeiten der Anlagen gewährleistet wird. Der Reinigungsaufwand verringert sich auf ein Minimum und die Standzeit der Koagulierflotte verlängert sich beträchtlich. Die erfindungsgemäße Formulierung wirkt außerdem algizid, bakterizid und fungizid.

Im einzelnen kann die erfindungsgemäße Formulierung unverdünnt dem Umlaufwasser über eine

Exzenterschneckenpumpe oder als maximal 50 %-ige, mit Wasser verdünnte Dispersion über eine Kolbendosierpumpe zugeführt werden.

Die jeweilige Dosierung richtet sich nach der Lacksorte und Lackmenge, die entklebt werden soll. Auch die Anlagenart und die Fahrweise spielen dabei eine wesentliche Rolle. Die optimale Dosierung wird jeweils im praktischen Einsatz ermittelt. Dabei kann von folgenden Basiswerten ausgegangen werden:

Wird die erfindungsgemäße Formulierung als Konzentrat in die Koagulierflotte eindosiert:
Grunddosierung: 0,1 - 0,2 % bezogen auf das Wasser volumen der Lackieranlage;
Nachdosierung: 1 kg Formulierung pro 3 - 5 kg Overspraymenge.

Hierbei soll die Grunddosierung 0,2 % nicht überschreiten, da sonst große Mengen an Wirkstoff ungenützt in den Lackschlamm übergehen können.

Bei direkter Dosierung in den Spritzbereich:
Grunddosierung: entfällt;
Nachdosierung: 0,1 - 0,5 kg Formulierung je 1 kg Overspraymenge.

Die beschriebene Wirkung der erfindungsgemäßen Formulierung (völlige Entklebung und aufschwimmende Koagulation von Lacken und vor allem von problematisch zu koagulierenden Steinschlagschutztypen) ist unter anderem auf folgende Merkmale zurückzuführen, die sie von herkömmlichen Koaguliermitteln unterscheidet:

a) sie ist frei von oberflächenaktiven Substanzen;
b) sie ist frei von salzartigen, korrosionsbegünstigenden Flockungsmitteln;
c) sie ist frei von Flockungshilfsmitteln, die die Auswaschflotte innerhalb kurzer Zeit mit Bakterien verseuchen und
d) sie ist frei von Alkalikomponenten.

Gegenstand der Erfindung ist somit auch die Verwendung der vorliegenden Einkomponentenformulierung zum Entkleben, Ausfällen und Koagulieren von Steinschlag- und Unterbodenschutz auf Basis von Wachsen, wachsähnlichen Kunststoffen und Kunststoffdispersionen sowie von Kunstharzlacken in Naßabscheidern von Spritzlackieranlagen unter Erzielung eines auf schwimmender Lackschlamms.

Das folgende Bieispiel erläutert die Erfindung.

**Beispiel**

Es wird eine Einkomponentenformulierung mit der folgenden Zusammensetzung hergestellt:

| | |
|---|---|
| Wasser | 74,5 Gew.-% |
| Propanol-2 | 3,0 Gew.-% |
| pyrogenes Siliciumdioxid mit einer spezifischen Oberfläche von 200 $m^2/g$ | 0,5 Gew.-% |
| Poly[oxyäthylen (dimethyliminio)-äthylen]dichlorid (Dichte: 1,15 $g/cm^3$ (bei 25°C); Flammpunkt im offenen "Cleveland": 108°C) | 4,0 Gew.-% |
| Polyurethanpulver mit einer Korngröße kleiner 1 µm | 18,0 Gew.-% |

Hierzu werden in das vorgelegte Wasser Propanol-2 und Siliciumdioxid sowie das Poly[oxyäthylen (dimethyliminio)äthylen]dichlorid eingerührt. Danach wird mit Hilfe eines langsam rotierenden Ankerrührwerks das Polyurethanpulver mit der vorgelegten flüssigen Mischung intensiv gemischt. Es entsteht dabei eine Paste mit thixotropen Eigenschaften, die rühr- und pumpfähig ist.

Mit dieser Paste werden unter Erzielung eines in Wasser mit flottierender Tendenz schwebenden Koagulats lösungsmittelhaltige Decklacke auf Kunstharzbasis, Primer und hochgefüllter 1 K- und 2 K-Steinschlagschutz entklebt und koaguliert.

**Patentansprüche**

1. Einkoffponentenformulierung zum Entkleben, Ausfällen und Koagulieren von Steinschlag- und Unterbodenschutz auf Basis von Wachsen, wachsähnlichen Kunststoffen und Kunststoffdispersionen sowie von Kunstharzlacken in Farbnebelnaßabscheidern von Spritzlackieranlagen unter Verwendung eines lackpartikelumhüllenden Zuschlagsstoffes, dadurch gekennzeichnet, daß sie als Zuschlagsstoff eine wäßrige, einen an der Wasseroberfläche schwimmenden Lackschlamm erzeugende Polyurethansuspension enthält, die ein Gemisch aus einem aliphatischen Alkohol mit 1 bis 3 Kohlenstoffatomen und

Poly[oxyäthylen(dimethyliminio)äthylen]dichlorid enthält.

2. Einkomponentenformulierung nach Anspruch 1, gekennzeichnet durch einen Gehalt an

a) 1 - 8 % aliphatischem Alkohol mit 1 - 3 Kohlenstoffatomen
b) 0,01 - 1,0 % pyrogenem Siliciumdioxid mit einer spezifischen Oberfläche von 50 - 380 $m^2/g$
c) 3 - 20 % Poly[oxyäthylen(dimethyliminio)äthylen]dichlorid
d) 10 - 30 % Polyurethanpulver

jeweils bezogen auf das Gewicht der Formulierung, wobei der Rest der Formulierung durch Wasser gebildet wird.

3. Verwendung der Einkomponentenformulierung gemäß einem der Ansprüche 1 bis 2 zur Entklebung, Ausfällung und Koagulierung von Steinschlag- und Unterbodenschutz auf Basis von Wachsen, wachsähnlichen Kunststoffen und Kunstoffdispersionen sowie von Konstharzlacken in Naßabscheidern von Spritzlackieranlagen unter Erzielung eines auf schwimmenden Lackschlamms.

**Claims**

1. One-component formulation for detaching, precipitating and coagulating underseals and compositions which protect against stones thrown up, which are based on waxes, wax-like plastics and plastics dispersions and synthetic resin lacquers in paint mist wet separators of paint spraying installations, using a paint particle-enveloping additive, characterised in that it contains as additive an aqueous polyurethane suspension which produces a paint sludge floating on the surface of the water and which contains a mixture of an aliphatic alcohol with 1 to 3 carbon atoms and poly[oxyethylene(di-methyliminio)ethylene]dichloride.

2. One-component formulation as claimed in claim 1, characterised in that it contains

a) 1 - 8 % of an aliphatic alcohol with 1 to 3 carbon atoms.
b) 0.01 - 1.0 % of pyrogenic silicon dioxide with a specific surface area of 50 - 380 $m^2/g$
c) 3 - 20 % of poly[oxyethylene(dimethyliminio)ethylene]dichloride
d) 10 - 30 % of polyurethane powder

each based on the weight of the formulation, the remainder of the formulation consisting of water.

3. Use of the one-component formulation as claimed in claim 1 or 2 for detaching, precipitating and coagulating underseals and compositions which protect against stones thrown up, which are based on waxes, wax-like plastics and plastics dispersions and synthetic resin lacquers in wet separators of paint spraying installations to produce a floating paint sludge.

**Revendications**

1. Formulation à un seul constituant pour le décollage, la précipitation et la coagulation d'une protection contre les chocs de pierre et d'une protection des bas de caisse à base de cires, de matières plastiques analogues à la cire et de dispersions de matières plastiques ainsi que de laques de résines synthétiques dans des séparateurs au mouillé pour brouillards de peinture d'installations de peinture par pulvérisation avec utilisation d'un additif enveloppant les particules de peinture, caractérisée en ce qu'elle contient comme additif une suspension aqueuse de polyuréthane produisant une boue de peinture surnageant à la surface de l'eau, qui contient un mélange d'un alcool aliphatique ayant 1 à 3 atomes de carbone et d'un dichlorure de poly[oxyéthylène(diméthylimino)éthylène].

2. Formulation à un seul constituant suivant la revendication 1 caractérisée par une teneur de

a) 1 - 8 % d'un alcool aliphatique ayant 1 à 3 atomes de carbone
b) 0,01 - 1,0 % de dioxyde de silicium obtenu par pyrogénation ayant une surface spécifique de 50 - 380 $m^2/g$
c) 3 - 20 % d'un dichlorure de poly[oxyéthylène(diméthylimino)éthylène]
d) 10 - 30 % d'une poudre de polyuréthane

par rapport dans chaque cas au poids de la formule, le reste de la formule étant constitué par de l'eau.

3. Utilisation de la formulation à un seul constituant suivant l'une des revendications 1 à 2 pour le décollage la précipitation et la coagulation d'une protection contre les chocs de pierre et d'une protection des bas de caisse à base de cires de matières plastiques analogues à la cire et de dispersions de matières plastiques ainsi que de peintures de résines synthétiques dans des séparateurs au mouillé d'installations de peinture par pulvérisation avec obtention d'une boue de peinture surnageante.